# EUROPÄISCHE PATENTSCHRIFT

(11) **EP 3 047 077 B1**
(45) Veröffentlichungstag und Bekanntmachung des Hinweises auf die Patenterteilung: **15.08.2018**
(21) Anmeldenummer: 14771873.8
(22) Anmeldetag: 22.09.2014
(51) Int. Cl.: E03F 1/00

(54) **VAKUUMTOILETTE MIT WECHSELSEITIGER QUETSCHVENTILSCHLIESSUNG**
VACUUM TOILET WITH ALTERNATING PINCH-VALVE CLOSURE
TOILETTES SOUS VIDE POURVUES D'UNE FERMETURE ALTERNÉE DE ROBINET-VANNE À MANCHON DÉFORMABLE

(30) Priorität: 20.09.2013 DE 202013008298 U
(43) Veröffentlichungstag der Anmeldung: 27.07.2016
(73) Patentinhaber: Evac GmbH, 22880 Wedel (DE)
(72) Erfinder: BOTH, Detlev, 20249 Hamburg (DE); MEYER, Patrick, 22880 Wedel (DE)
(74) Vertreter: Eisenführ Speiser
(86) Internationale Anmeldenummer: PCT/EP2014/070098
(87) Internationale Veröffentlichungsnummer: WO 2015/040207

(56) Entgegenhaltungen:
- WO-A1-02/059432
- WO-A1-03/000999
- WO-A1-03/104574
- DE-A1-102004 042 147
- DE-U1-202009 010 176

## Beschreibung

Die Erfindung betrifft eine Vakuumtoilette, umfassend ein Toilettenbecken mit einer Beckenauslassöffnung, einen Zwischenbehälter mit einer Zwischenbehälter-Einlassöffnung, einer Zwischenbehälter-Auslassöffnung und einem Steuerluftleitungsanschluss, einen ersten Strömungsweg durch eine erste Auslassleitung, welche die Beckenauslassöffnung mit der Zwischenbehälter-Einlassöffnung verbindet, ein Einlassventil, welches den ersten Strömungsweg in einer Offenstellung freigibt und in einer Schließstellung sperrt, einen Abwassertank mit einer Abwassertank-Einlassöffnung, die mittels eines zweiten Strömungswegs über eine zweite Auslassleitung mit der Zwischenbehälter-Auslassöffnung verbunden ist, ein Auslassventil, welches den zweiten Strömungsweg Strömungsweg in einer Offenstellung freigibt und in einer Schließstellung sperrt, eine Steuerungseinheit, welche ausgebildet ist, um einen Spülvorgang auszuführen, indem in einem ersten Spülungsschritt über den Steuerluftleitungsanschluss ein Unterdruck im Zwischenbehälter erzeugt und nach Erzeugung des Unterdrucks im Zwischenbehälter das Einlassventil aus der Schließstellung in die Offenstellung geschaltet wird, in einem nachfolgenden zweiten Spülungsschritt das Einlassventil geschlossen wird, in einem nachfolgenden dritten Spülungsschritt ein Überdruck im Zwischenbehälter erzeugt und nach Erzeugung des Überdrucks im Zwischenbehälter das Auslassventil aus der Schließstellung in die Offenstellung geschaltet wird.

Vakuumtoiletten dieser Bauart werden in verschiedenen Fahrzeugen eingesetzt, eine typische Anwendung liegt in Bahnwaggons und Luftfahrzeugen oder Reisebussen sowie an Bord von Wasserfahrzeugen.

Dabei beruht das Funktionsprinzip dieser Vakuumtoiletten darauf, dass das Abwasser aus dem Toilettenbecken zunächst in einen Zwischenbehälter eingesaugt wird und dann aus diesem Zwischenbehälter in einen Abwassertank befördert wird, typischerweise mittels eines Überdrucks. Um den Unterdruck und den Überdruck im Zwischenbehälter aufbauen zu können ist in der Leitung zwischen dem Toilettenbecken und dem Zwischenbehälter einerseits und der Leitung zwischen dem Zwischenbehälter und dem Abwassertank andererseits ein Einlassventil beziehungsweise ein Auslassventil angeordnet, die durch eine Steuerungseinheit angesteuert werden können, um sie individuell zu schließen und zu öffnen. Es ist bekannt, eine Vakuumtoilette dabei solcher Art anzusteuern, dass im unbenutzten Zustand zum Geruchsverschluss zunächst die Ventile geschlossen sind, bei Aktivierung eines Spülvorgangs durch einen Betätigungsknopf ein Unterdruck im Zwischenbehälter aufgebaut wird, dann das Einlassventil öffnet, um das Abwasser aus dem Toilettenbecken abzusaugen und hieraufhin dass Einlassventil wieder schließt, nachdem das Abwasser in den Zwischenbehälter eingesaugt wurde. Dann wird bei geschlossenen Einlass- und Auslassventil ein Überdruck im Zwischenbehälter aufgebaut und das Abwasser dann durch Öffnen des Auslassventils in den Abwassertank befördert und schließlich das Auslassventil zur Herstellung eines Geruchsverschlusses wieder geschlossen.

Aus DE 20 2009 010 176 U1 ist eine Vakuumtoilette vorbekannt, bei der das Abwasser mittels Unterdruck in einen Zwischenbehälter abgeführt wird und aus dem Zwischenbehälter mittels eines Überdrucks in einen Fäkalientank abgeführt wird. Eine Steuerungseinheit steuert abgestimmte Steuerungszeiten eines Entlüftungsventils und eines Auslassschiebers.

Aus DE 10 2004 042 147 A1 und WO 02/059432 A1 ist eine Kompaktvakuumtoilettenanordnung vorbekannt, bei der ebenfalls das Abwasser aus einer Toilettenschüssel über eine Zwischenkammer, die mit einem Unterdruck und einem Überdruck beaufschlagt werden kann, in einen Abwassertank befördert wird.

Aus WO 03/000999 A1 ist eine Vakuumtoilettenanordnung bekannt, bei der das Abwasser über einen Unterdruck in einer Abwasserleitung aus der Toilettenschüssel in einen Abwassersammelbehälter geleitet wird.

Aus WO 03/104574 A1 ist eine Toilettenanlage vorbekannt, bei der mittels einer kombinierten Spül-/Absaugeinheit ein simultaner Spülvorgang der Toilettenschüssel und Absaugvorgang aus der Toilettenschüssel durchgeführt werden kann.

Eine grundsätzliche Problematik bei diesen Vakuumtoiletten liegt in der Funktionalität der Ventile. Die Ventile müssen einerseits ein zuverlässiges Öffnen und Schließen gewährleisten, andererseits einen ausreichenden Durchtrittsquerschnitt für das Abwasser und darin enthaltene Feststoffe aufweisen. Weil lange Wartungsintervalle angestrebt werden, müssen diese Funktionen über eine hohe Zyklenzahl aufrechterhalten bleiben. Zugleich ist es aufgrund eines angestrebten sicheren Geruchsverschlusses notwendig, dass die Ventile jederzeit gasdicht geschlossen werden können.

Aus diesen Anforderungen heraus hat sich die Verwendung von Quetschventilen in vielen Anwendungsfällen durchgesetzt. Bei einem Quetschventil wird ein elastisch verformbarer Schlauchabschnitt durch eine äußere radiale Kraft mittels eines mechanischen Elements oder eines Außendrucks zusammengequetscht, wodurch die Innenwände des elastischen Schlauchabschnitts aufeinander gepresst werden und so einen Verschluss bewirken. Der elastische Schlauchabschnitt ist dabei idealer Weise so ausgebildet, dass er bei Entfall der äußeren radialen Kraft durch elastische Rückverformung wieder in eine offene Stellung zurück geht.

Während solche Quetschventile zwar generell den Anforderungen an die Durchführung eines Spülvorgangs genügen hat sich über einen längeren Betrieb gezeigt, dass die Quetschventile aufgrund der äußeren Krafteinwirkung nach einer größeren Anzahl an Zyklen eine dauerhafte Verformung erhalten und daher nicht mehr vollständig in die offene Stellung zurückkehren, wenn die äußere Kraft entfernt wird. Dies hat zur Folge, dass die Durchlässigkeit des Quetschventils nicht mehr vollständig gewährleistet ist, was im Betrieb zu einer unzureichenden Abwasserabsaugung beziehungsweise einem unzureichenden Transport des Abwassers aus dem Zwischenbehälter in den Abwassertank führt. Zudem können Verstopfungen des Abwassersystems im Bereich der Quetschventile auftreten.

Der Erfindung liegt die Aufgabe zugrunde, eine Vakuumtoilette bereitzustellen, welche diese Probleme vermeidet.

Erfindungsgemäß wird diese Problematik dadurch gelöst, dass die Steuerungseinheit ausgebildet ist, um nach dem dritten Spülungsschritt in einem ersten Verschlusszustand das Einlassventil geschlossen und das Auslassventil geöffnet zu halten, in einem zweiten Verschlusszustand das Einlassventil geöffnet und das Auslassventil geschlossen zu halten, und innerhalb einer Reihe mehrerer aufeinanderfolgender Spülvorgänge den ersten und zweiten Verschlusszustand abwechselnd einzustellen.

Erfindungsgemäß ist die Vakuumtoilette dadurch fortgebildet, dass mittels der Steuerungseinheit zwei unterschiedliche Verschlusszustände eingestellt werden können. Bei beiden Verschlusszuständen ist dabei eine Geruchssperre zwischen Abwassertank und Toilettenbecken hergestellt, indem entweder das Einlassventil oder das Auslassventil geschlossen ist. Das jeweils andere Ventil wird hingegen erfindungsgemäß in einem offenen Zustand gehalten. Durch diese erfindungsgemäße Fortbildung wird erreicht, dass immer nur eines der beiden Ventile während der Nichtbenutzung der Vakuumtoilette im geschlossenen Zustand, also im gequetschten Zustand gehalten wird. Das jeweils andere Ventil hingegen wird nicht gequetscht.

Die entsprechenden ersten und zweiten Verschlusszustände werden dabei über den Betriebszeitraum der Vakuumtoilette abwechselnd eingestellt. Hierunter ist zu verstehen, dass insbesondere der zweite Verschlusszustand jeweils nach einem Spülvorgang eingestellt wird, wenn vor dem Spülvorgang der erste Verschlusszustand eingestellt war und umgekehrt, sodass sich erster und zweiter Verschlusszustand laufend in einem 1:1 - Verhältnis abwechseln. Genauso kann aber auch der erste Verschlusszustand zweimal hintereinander, nach entsprechend zwei Spülvorgängen eingestellt werden und nach den darauffolgenden nächsten beiden Spülvorgängen der zweite Verschlusszustand eingestellt werden, sodass die Verschlusszustände sich in einer 2:2 - Sequenz miteinander abwechseln. Analog kann jeder Verschlusszustand auch 3, 4, 5 oder noch mehrmals hintereinander eingestellt werden, bevor auf den anderen Verschlusszustand gewechselt wird. Bevorzugt ist dabei die Anzahl, in der ein jeweiliger Verschlusszustand aufeinanderfolgend ohne Wechsel eingestellt wird gleich zu der Anzahl, in welcher der andere Verschlusszustand nach dem Wechsel eingestellt wird, in bestimmten Ausführungsformen kann aber auch eine unterschiedliche Anzahl der beiden Verschlusszustände eingestellt werden.

Durch die erfindungsgemäße Ansteuerung der beiden Verschlusszustände wird erreicht, dass das Einlass- bzw. Auslassventil nur etwa für die Hälfte des Zeitraums in einem geschlossenen, gequetschten Zustand angesteuert und gehalten wird im Vergleich zu der Ansteuerungsweise nach dem Stand der Technik. Hierdurch wird die dauerhaft wirkende Verformung des Einlass- und Auslassventils signifikant herabgesetzt und der Zeitraum, über den das Ein- und Auslassventil einen freien, nicht durch dauerhafte Verformung eingeschränkten Durchlassquerschnitt aufweist, entscheidend verlängert.

Grundsätzlich kann der jeweils eingestellte erste oder zweite Verschlusszustand solange beibehalten werden, bis erneut ein Spülvorgang ausgelöst wird, um nach diesem Spülvorgang einen Wechsel des Verschlusszustands vorzunehmen und folglich das zuvor geschlossen gehaltene Ein- oder Auslassventil zu entlasten und offen zu halten. Alternativ hierzu kann aber auch ein von den Spülvorgängen unabhängiger Wechsel erfolgen, indem beispielsweise in Abhängigkeit eines vorbestimmten Zeitablaufs zwischen dem ersten und zweiten Verschlusszustand hin- und hergewechselt wird. Bei dieser Ausgestaltung wird beispielsweise in vorherbestimmten Zeitabständen vom ersten in den zweiten Verschlusszustand gewechselt und nach einem entsprechend vorbestimmten Zeitabstand wieder in den ersten Verschlusszustand zurückgewechselt usw. Bei dieser Ausführungsweise wird vermieden, dass ein Verschlusszustand über einen besonders langen Zeitraum aufrecht erhalten wird, wenn die Toilette über einen entsprechend langen Zeitraum keinen Spülvorgang auslöst und eine regelmäßige Erholung des Ein- und Auslassventils durch Schalten in den Offenzustand ermöglicht. In einer anderen Ausgestaltung kann die zeitgesteuerte Wechselweise zwischen erstem und zweitem Verschlusszustand auch zusätzlich zu der nach einem Spülvorgang vorgenommenen Wechselweise vorgesehen sein.

Gemäß einer ersten bevorzugten Ausführungsform ist vorgesehen, dass die Steuerungseinheit ausgebildet ist, um nach einer Anzahl von N-1 Spülvorgängen jeweils den ersten Verschlusszustand einzustellen und nach dem N-ten Spülvorgang den zweiten Verschlusszustand einzustellen, wobei N eine Anzahl zwischen 2 und 50 ist und/oder dass die Steuerungseinheit ausgebildet ist, um nach einer Anzahl von M-1 Spülvorgängen jeweils den zweiten Verschlusszustand einzustellen und nach dem M-ten Spülvorgang den ersten Verschlusszustand einzustellen, wobei M eine Anzahl zwischen 2 und 50 ist und/oder dass die Steuerungseinheit ausgebildet ist, um nach einer vorbestimmten Zeitspanne vom ersten in den zweiten Verschlusszustand zu wechseln und nach Ablauf einer weiteren vorbestimmten zweiten Zeitspanne, die vorzugsweise der ersten Zeitspanne entspricht, vom zweiten in den ersten Verschlusszustand zurückzuwechseln.

Mit dieser Ausgestaltung wird eine steuerungstechnisch zuverlässige Wechselweise zwischen dem ersten und zweiten Verschlusszustand erzielt, die sich einerseits an einem ausgelösten Spülvorgang als Trigger orientiert, andererseits an einer abgelaufenen Zeitspanne als Trigger orientieren kann oder beide Trigger gemeinsam in einer logischen Oder-Verknüpfung als Anlass für einen Wechsel des Verschlusszustandes heranzieht.

Gemäß einer weiteren bevorzugten Ausführungsform ist vorgesehen, dass eine mit einem Spülwasserbehälter verbundene Spülwasserleitung in das Toilettenbecken mündet und die Steuerungseinheit ausgebildet ist, um nach dem dritten Spülungsschritt eine über die Spülwasserleitung in das Toilettenbecken abgegebene Nachspülwassermenge zu dosieren, wobei die vorzugsweise Spülwassermenge im zweiten Verschlusszustand größer ist als im ersten Verschlusszustand. Eine Spülwasserleitung, die aus einem Spülwasserbehälter Wasser in das Toilettenbecken zuführen kann, insbesondere unter einem Überdruck einsprühen kann, wird oftmals dazu eingesetzt, um bereits vor dem Absaugen des Abwassers eine Reinigung des Toilettenbeckens mit Zufuhr von Spülwasser zu erzielen. Gemäß dieser Fortbildung wird die Spülwasserleitung dazu verwendet, um nach erfolgtem Absaugen des Abwassers aus dem Toilettenbecken Spülwasser zuzuführen, welches die Funktion einer zusätzlichen Geruchssperre erzielt. Das Spülwasser wird zu diesem Zweck in das Toilettenbecken eingefüllt, nachdem einer der beiden Verschlusszustände hergestellt worden ist, sodass das Spülwasser aus dem Toilettenbecken bis zu dem geschlossenen Ein- bzw. Auslassventil strömen kann, dieses aber nicht passieren kann. Es bildet sich daher eine Wassersäule zwischen dem Toilettenbecken und dem Ein- bzw. Auslassventil, die als zusätzliche Geruchssperre wirkt.

Dabei ist es bevorzugt vorgesehen, dass die Menge des in das Toilettenbecken eingefüllten Spülwassers abhängig ist von dem jeweils eingestellten Verschlusszustand. So kann insbesondere dann, wenn der erste Verschlusszustand, bei dem das Einlassventil geschlossen ist, eine kleinere Menge an Spülwasser in das Toilettenbecken eingeführt werden als im zweiten Verschlusszustand, wenn das Auslassventil geschlossen und das Einlassventil geöffnet ist, weil das Volumen, welches der Leitungsabschnitt zwischen dem Toilettenbecken und dem Einlassventil aufnimmt, kleiner ist als das Volumen zwischen Toilettenbecken und Auslassventil. Insbesondere muss im zweiten Verschlusszustand auch ein Teil des Zwischenbehälters oder der gesamte Zwischenbehälter durch das Spülwasser mitbefüllt werden und die Leitungslänge zwischen Toilettenbecken und Auslassventil ist größer als die Leitungslänge zwischen Toilettenbecken und Einlassventil. Durch die erfindungsgemäße Anpassung des Spülwasservolumens in Abhängigkeit des Verschlusszustandes wird erreicht, dass stets ein übereinstimmender Pegel an Spülwasser im Toilettenbecken bzw. in der Leitung steht und ein sicherer Verschlusszustand bei zugleich sparsamem Gebrauch von Spülwasser zum Geruchsverschluss erreicht wird.

Noch weiter ist es dabei bevorzugt, wenn die Steuerungseinheit ausgebildet ist, um vor dem ersten Spülungsschritt eine über die Spülwasserleitung in das Toilettenbecken abgegebene Vorspülwassermenge zu dosieren. Mit einer solchen Vorspülwassermenge kann eine Reinigung des Toilettenbeckens vor dem Absaugen des Abwassers erreicht werden und zudem eine für den Absaugvorgang günstige Zusammensetzung und Konsistenz des Abwassers erzielt werden. Gemäß einer weiteren bevorzugten Ausführungsform ist vorgesehen, dass das Einlassventil und/oder das Auslassventil ein Quetschventil ist, bei dem die Schließstellung durch radiales Zusammendrücken eines elastischen Schlauchabschnitts erzeugt wird und die Offenstellung durch elastische Rückverformung des elastischen Schlauchabschnitts erzeugt wird. Die erfindungsgemäße Ausgestaltung einer Vakuumtoilette ist für verschiedene Bauweisen des Ein- und Auslassventils vorteilhaft, da grundsätzlich der Vorteil erreicht wird, dass die Ventile nur wechselweise in der Geschlossenstellung gehalten werden und daher Funktionsbeeinträchtigungen wie Verklemmungen, Ablagerungen und dergleichen, die vornehmlich im geschlossenen Zustand des Ventils auftreten, nur in reduziertem Ausmaß auftreten können. Insbesondere vorteilhaft ist die erfindungsgemäße Steuerungsweise einer Vakuumtoilette dann, wenn es sich bei dem Einlassventil oder dem Auslassventil oder beiden Ventilen um Quetschventile handelt, also Ventile, die einen elastischen Schlauchabschnitt aufweisen, der durch Rückverformung aus einem zusammengequetschten Zustand, in dem der Innenquerschnitt an der Quetschstelle geschlossen ist, in einen offenen Zustand mit durchgängigem Innenquerschnitt den Öffnungsvorgang ausführt. Solche Quetschventile sind regelmäßig unempfindlich gegenüber Verschmutzungen und weisen in der Betriebsweise in einer Vakuumtoilette eine lange Lebensdauer auf. Diese Lebensdauer kann, insbesondere hinsichtlich des angestrebten großen Durchtrittsquerschnitts, mittels der erfindungsgemäßen Vakuumtoilette weiter erhöht werden. Unter einem elastischen Schlauchabschnitt ist hierbei insbesondere ein Schlauchabschnitt zu verstehen, der aus einem elastomeren Material hergestellt ist, wie beispielsweise aus einem gummiartigen Material, einem Kunststoff auf Silikonbasis, einem Elastomer oder dergleichen. Unter einer elastischen Verformung ist hierbei zu verstehen, dass die Verformung ohne bleibende, plastische Verformungsanteile des Materials erfolgt oder zumindest im Wesentlichen ohne solche bleibenden plastischen Verformungsanteile erfolgt.

Schließlich ist gemäß einer weiteren bevorzugten Ausführungsform vorgesehen, dass der Schlauchabschnitt von einem Ventilgehäuse umgeben ist, welches einen Zwischenraum zwischen dem Ventilgehäuse und dem Schlauchabschnitt ausbildet und die Steuerungseinheit ausgebildet ist, um eine mit dem Zwischenraum verbundene Vakuumquelle anzusteuern zum Aufbringen eines Vakuums im Zwischenraum zur Unterstützung der Rückkehr des Schlauchabschnitts aus der Schließstellung in die Offenstellung. Durch die Ausgestaltung des Einlassventils und/oder des Auslassventils mit einem jeweils für das Ein- bzw. Auslassventil vorgesehenen Ventilgehäuse, welches einen Zwischenraum zum Schlauchabschnitt ausbildet, kann die gewünschte Quetschwirkung mittels eines Überdrucks im Zwischenraum erzeugt werden und folglich eine wirksame Steuerung des Ventils durch eine pneumatische Ansteuerung erfolgen. Weiterhin kann durch Aufbringen eines Unterdrucks die Öffnungsbewegung des Ventils unterstützt werden, indem auf die Außenwand des Schlauchabschnitts eine nach radial auswärts wirkende Kraft über das Vakuum im Zwischenraum ausgeübt wird.

Ein weiterer Aspekt der Erfindung ist ein Verfahren zur automatischen Steuerung einer Vakuumtoilette mit einem Toilettenbecken mit einer Beckenauslassöffnung mittels einer Steuerungseinheit, mit den durch die Steuerungseinheit sequentiell gesteuerten Schritten eines Spülvorgangs: Beaufschlagen eines Zwischenbehälter mit einem Vakuum, Öffnen eines Einlassventils in einem Strömungsweg zwischen der Toilettenbeckenauslassöffnung und einer Zwischenbehälter-Einlassöffnung, Schließen des Einlassventils, Beaufschlagen des Zwischenbehälters mit einem Überdruck und Öffnen eines Auslassventil in einem Strömungsweg zwischen einer Zwischenbehälter-Auslassöffnung und einer Abwassertank-Einlassöffnung, welches sich auszeichnet durch wechselweises Einstellen eines ersten und zweiten Verschlusszustand innerhalb einer Reihe mehrerer aufeinanderfolgender Spülvorgänge, wobei in dem ersten Verschlusszustand das Einlassventil geschlossen und das Auslassventil geöffnet ist, und in dem zweiten Verschlusszustand das Einlassventil geöffnet und das Auslassventil geschlossen ist.

Das Verfahren kann dadurch fortgebildet werden, dass nach einer Anzahl von N-1 Spülvorgängen jeweils der erste Verschlusszustand eingestellt und nach dem N-ten Spülvorgang der zweite Verschlusszustand eingestellt wird, wobei N eine Anzahl zwischen 2 und 50 ist und/oder dass nach einer Anzahl von M-1 Spülvorgängen jeweils der zweite Verschlusszustand eingestellt und nach dem M-ten Spülvorgang der erste Verschlusszustand eingestellt wird, wobei M eine Anzahl zwischen 2 und 50 ist und/oder dass nach Ablauf einer vorbestimmten Zeitspanne zwischen dem ersten und zweiten Verschlusszustand gewechselt wird.

Weiterhin kann das Verfahren dadurch fortgebildet werden, dass nach dem Spülvorgang eine Nachspülwassermenge in das Toilettenbecken abgegeben und so dosiert wird, dass die Spülwassermenge im zweiten Verschlusszustand größer ist als im ersten Verschlusszustand.

Weiterhin kann das Verfahren dadurch fortgebildet werden, dass vor dem ersten Spülungsvorgang eine Vorspülwassermenge in das Toilettenbecken abgegeben wird.

Weiterhin kann das Verfahren dadurch fortgebildet werden, dass das Einlassventil und/oder das Auslassventil durch radiales Zusammendrücken eines elastischen Schlauchabschnitts geschlossen und durch elastische Rückverformung des elastischen Schlauchabschnitts geöffnet wird.

Weiterhin kann das Verfahren dadurch fortgebildet werden, dass der Öffnungsvorgang des Einlassventils und/oder des Auslassventils durch Aufbringen eines Vakuums in einem Zwischenraum zwischen einem Ventilgehäuse und dem Schlauchabschnitt unterstützt wird.

Hinsichtlich der Arbeitsweise und Vorteile des erfindungsgemäßen Verfahrens wird auf die voranstehend erläuterte Ausgestaltung der hierzu korrespondierenden Ausführungsformen der erfindungsgemäßen Vakuumtoilette Bezug genommen.

Schließlich ist ein weiterer Aspekt der Erfindung eine Steuerungseinheit zur Steuerung eines Spülvorgangs einer Vakuumtoilette, wobei die Steuerungseinheit ausgebildet ist, um in einem ersten Spülungsschritt über einen Steuerluftleitungsanschluss einen Unterdruck in einem Zwischenbehälter zu erzeugen und nach Erzeugung des Unterdrucks im Zwischenbehälter ein im Strömungsweg zwischen einem Toilettenbecken und dem Zwischenbehälter angeordnetes Einlassventil aus einer Schließstellung in eine Offenstellung zu schalten, in einem nachfolgenden zweiten Spülungsschritt das Einlassventil zu schließen, in einem nachfolgenden dritten Spülungsschritt einen Überdruck im Zwischenbehälter zu erzeugen und nach Erzeugung des Überdrucks im Zwischenbehälter ein im Strömungsweg zwischen dem Zwischenbehälter und einem Abwassertank angeordnetes Auslassventil aus der Schließstellung in die Offenstellung zu schalten, wobei die Steuerungseinheit ausgebildet ist, um nach dem dritten Spülungsschritt in einem ersten Verschlusszustand das Einlassventil geschlossen und das Auslassventil geöffnet zu halten, in einem zweiten Verschlusszustand das Einlassventil geöffnet und das Auslassventil geschlossen zu halten, und den innerhalb einer Reihe mehrerer aufeinanderfolgender Spülvorgänge den ersten und zweiten Verschlusszustand abwechselnd einzustellen.

Die so von der Erfindung umfasste Steuerungseinheit kann durch eine elektronische Rechnereinheit bereitgestellt werden, die in der Vakuumtoilette selbst installiert werden kann oder beabstandet von der Vakuumtoilette installiert ist und mittels Steuerungsleitungen mit der Vakuumtoilette zur Signalübertragung verbunden ist.

Die Steuerungseinheit kann in gleicher Weise fortgebildet werden, wie dies für die in der Vakuumtoilette der zuvor erläuterten bevorzugten Ausführungsformen installierten Steuerungseinheit beschrieben wurde.

Schließlich ist ein weiterer Aspekt der Erfindung ein Datenträger, welcher einen Datencode enthält, der bei Ausführung auf einem elektronischen Rechner die Steuerungsverfahren des erfindungsgemäßen Steuerungsverfahrens ausführt.

Eine bevorzugte Ausführungsform der Erfindung wird anhand der anhängenden Figuren erläutert. Es zeigen:
- Figur 1: ein schematisches Leitungs- und Signalübertragungsdiagramm einer erfindungsgemäßen Vakuumtoilette,
- Figuren 2 - 5: einen Ablauf eines Spülvorgangs in einer schematischen Ansicht der erfindungsgemäßen Vakuumtoilette,
- Figur 6: einen ersten Verschlusszustand der erfindungsgemäßen Vakuumtoilette, und
- Figur 7: einen zweiten Verschlusszustand der erfindungsgemäßen Vakuumtoilette.

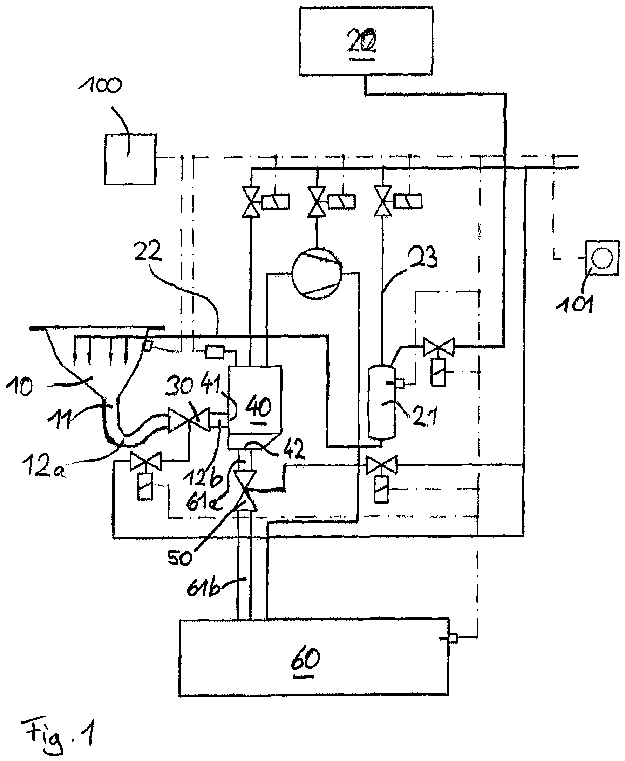

Wie aus Figur 1 ersichtlich, umfasst eine erfindungsgemäße Vakuumtoilette ein Toilettenbecken 10, in das eine Spülleitung 22 mit mehreren Austrittsdüsen im Toilettenbecken mündet. Die Spülleitung 22 ist mit einem Spülwassertank 20 verbunden, in diese Verbindung ist ein Spülwasserzwischenbehälter 21 eingeschlossen, in dem das Spülwasser mit Druckluft aus einer Druckluftleitung 23 beaufschlagt werden kann und hierdurch mit erhöhten Druck in das Toilettenbecken eingesprüht werden kann.

Das Toilettenbecken 10 weist eine Auslassöffnung 11 auf, die mittels eines ersten Abschnitts 12a einer ersten Abwasserleitung in ein Einlassventil 30 mündet, welches mittels eines zweiten Leitungsabschnitts 12b der ersten Abwasserleitung mit einer Zwischenbehältereinlassöffnung 41 eines Zwischenbehälters 40 verbunden ist.

Der Zwischenbehälter 40 weist eine Zwischenbehälterauslassöffnung 42 auf, die über einen ersten Abschnitt 61a einer zweiten Abwasserleitung mit einem Auslassventil 50 verbunden ist, das über einen zweiten Abschnitt 61b der zweiten Abwasserleitung mit einem Abwassertank 60 in Verbindung steht.

Eine elektronische Steuerungseinheit 100 ist mit einem Auslöseknopf 101 verbunden, der einen Spülvorgang auslöst. Weiterhin ist die elektronische Steuerungseinheit 100 mittels elektrischer Leitungen mit elektromagnetischen Pneumatikventilen verbunden, welche einzeln ansteuerbar sind zur Erzeugung von einem Unterdruck im Zwischenbehälter 40, einem Überdruck im Zwischenbehälter 40 und einem Überdruck im Spülwasserzwischenbehälter 21.

Weiterhin können mittels der elektronischen Steuerungseinheit 100 elektromagnetische Pneumatikventile angesteuert werden, die einen Überdruck oder Unterdruck auf einen Zwischenraum des Einlassventils 30 und ein Zwischenraum des Auslassventils 50 aufbringen, um das Einlassventil zu schließen bzw. zu öffnen und das Auslassventil zu schließen bzw. zu öffnen.

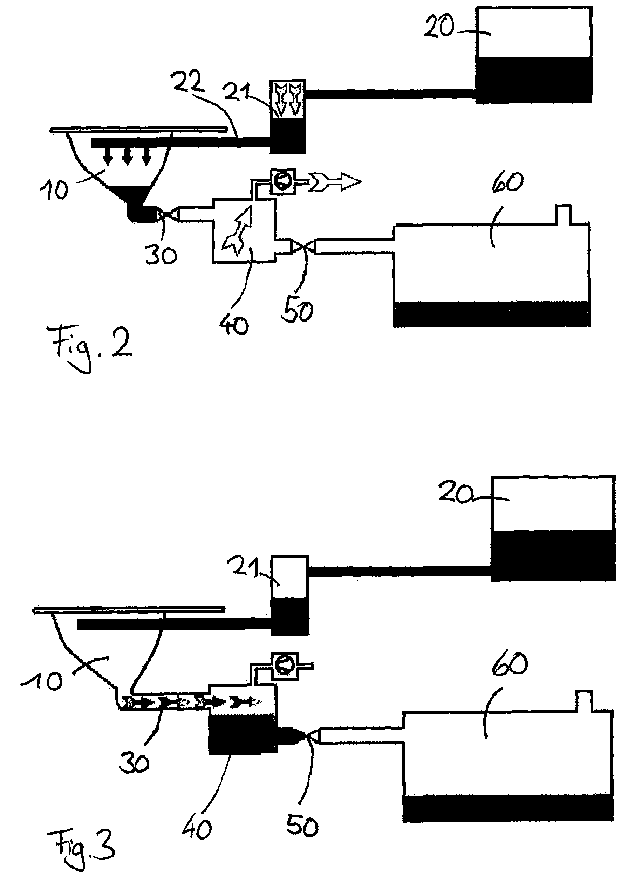

Figur 2 zeigt die erfindungsgemäße Vakuumtoilette bei Einleitung eines Spülvorgangs zur Entleerung von Abwasser aus dem Toilettenbecken. In einem ersten Spülschritt wird über die Spülwasserleitung Spülwasser in das Toilettenbecken eingesprüht und zugleich bei geschlossenem Einlassventil 30 und Auslassventil 50 ein Vakuum im Zwischenbehälter 40 aufgebaut.

In dem in Figur 3 dargestellten zweiten Spülschritt öffnet das Einlassventil 30, sodass durch den Unterdruck im Zwischenbehälter das Abwasser mit dem Spülwasser aus dem Toilettenbecken 10 in den Zwischenbehälter 40 eingesogen wird.

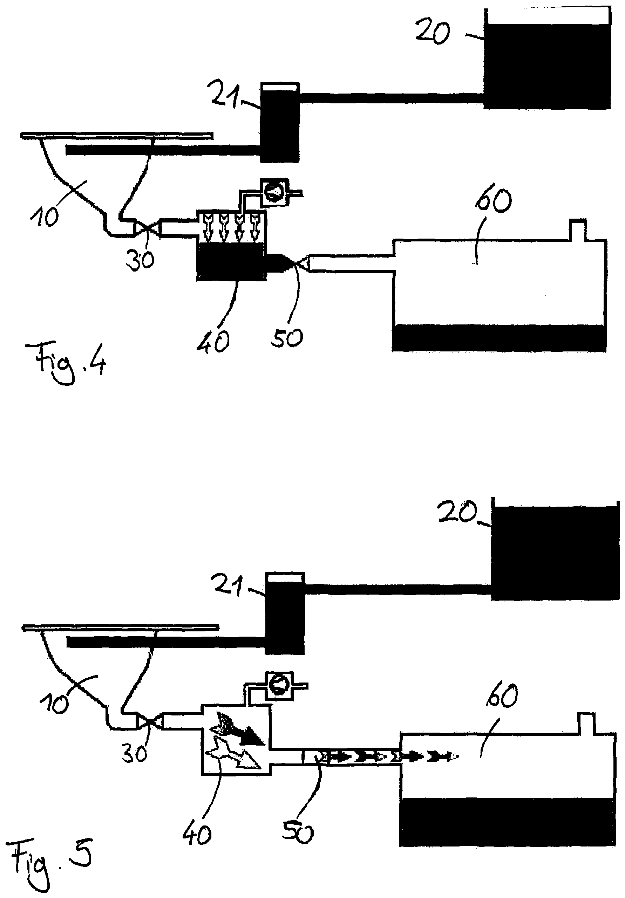

In Figur 4 ist ein dritter Spülschritt zu erkennen, in dem bei nun geschlossenem Einlassventil ein Überdruck im Zwischenbehälter aufgebaut wird.

In einem in Figur 5 dargestellten vierten Spülschritt wird durch Öffnen des Auslassventils 50 das Gemisch aus Abwasser und Spülwasser aus dem Zwischenbehälter 40 in den Abwassertank 60 gedrückt.

Nach diesem Vorgang ist der Spülvorgang in Form des Transports des Abwassers aus dem Toilettenbecken 10 in den Abwassertank 60 abgeschlossen und es muss ein geruchssicherer Verschlusszustand eingestellt werden.

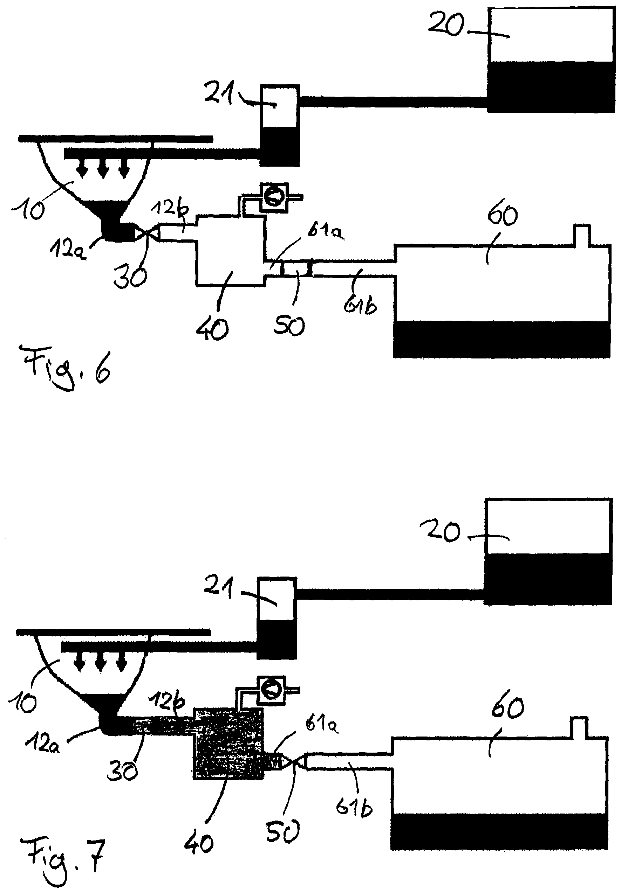

Figur 6 zeigt einen nachfolgenden Prozessschritt zur Herstellung eines ersten Verschlusszustandes. Wie aus der Figur ersichtlich, wird zu diesem Zweck aus dem Spülwassertank Spülwasser in das Toilettenbecken eingesprüht, was eine Nachreinigung des Toilettenbeckens bewirkt. In diesem ersten Verschlusszustand ist das Einlassventil 30 geschlossen und das Auslassventil 50 geöffnet. Das eingesprühte Spülwasser sammelt sich hierdurch am Boden des Toilettenbeckens, tritt durch die Auslassöffnung des Toilettenbeckens in den ersten Abschnitt der ersten Abwasserleitung 12a ein und gelangt bis zum geschlossenen Einlassventil 30. Das so angeordnete Spülwasser bildet gemeinsam mit dem Einlassventil einen sicheren Geruchsverschluss zwischen dem Toilettenbecken 10 und dem Abwassertank 60 aus.

Figur 7 zeigt einen zweiten Verschlusszustand, der alternativ und wechselweise zum ersten Verschlusszustand eingestellt werden kann. Auch bei diesem Verschlusszustand wird Spülwasser in das Toilettenbecken eingesprüht. Beim zweiten Verschlusszustand ist hierbei das Einlassventil 30 offen und das Auslassventil 50 geschlossen. Das Spülwasser sammelt sich hierdurch am Boden des Toilettenbeckens, gelangt durch das Einlassventil 30 und den Zwischenbehälter 40 bis zum geschlossenen Auslassventil 50 und bleibt vor dem Auslassventil stehen. Für den zweiten Verschlusszustand muss ein größeres Volumen an Spülwasser eingefüllt werden. Dies kann, je nach Bauart und Abwasserleitungsführung der Vakuumtoilette verschiedene Ursachen haben. Bei Vakuumtoiletten, in denen der zweite Abschnitt der Abwasserleitung 12b als Steigrohr ausgeführt ist und nach oben an den Zwischenbehälter geführt ist, wird bei geöffnetem Einlassventil dieses Steigrohr teilweise oder vollständig gefüllt, wodurch ein geringfügig größeres Volumen zur Erzielung eines hydraulischen Geruchsverschlusses erforderlich ist. Bei Vakuumtoiletten ohne eine solche Steigrohrausgestaltung muss ein Volumen bestehend aus der ersten Abwasserleitung 12a,b, einem Teil des Zwischenbehälters 40 oder des gesamten Zwischenbehälters und dem ersten Abschnitt 61a der zweiten Abwasserleitung gefüllt werden, um einen hydraulischen Geruchsverschluss zu bilden. Bei beiden Varianten bildet das Spülwasser dann gemeinsam mit dem geschlossenen Auslassventil einen sicheren Geruchsverschluss zwischen Abwassertank und Toilettenbecken aus. Es ist insbesondere bevorzugt, die erste und zweite Wassermenge solcherart zu steuern, dass sich im Toilettenbecken ein Pegelstand des Spülwassers bildet, der beim ersten Verschlusszustand übereinstimmend ist zu dem Pegelstand beim zweiten Verschlusszustand.

## Patentansprüche

1. Vakuumtoilette, umfassend:
- ein Toilettenbecken (10) mit einer Beckenauslassöffnung,
- einen Zwischenbehälter (40) mit einer Zwischenbehälter-Einlassöffnung (41), einer Zwischenbehälter-Auslassöffnung (42) und einem Steuerluftleitungsanschluss,
- einen ersten Strömungsweg durch eine erste Auslassleitung, welche die Beckenauslassöffnung mit der Zwischenbehälter-Einlassöffnung (41) verbindet,
- ein Einlassventil (30), welches den ersten Strömungsweg in einer Offenstellung freigibt und in einer Schließstellung sperrt,
- einen Abwassertank (60) mit einer Abwassertank-Einlassöffnung, die mittels eines zweiten Strömungswegs über eine zweite Auslassleitung mit der Zwischenbehälter-Auslassöffnung verbunden ist,
- ein Auslassventil (50), welches den zweiten Strömungsweg in einer Offenstellung freigibt und in einer Schließstellung sperrt,
- eine Steuerungseinheit (100), welche ausgebildet ist, um einen Spülvorgang auszuführen, indem
▪ in einem ersten Spülungsschritt über den Steuerluftleitungsanschluss ein Unterdruck im Zwischenbehälter (40) erzeugt und nach Erzeugung des Unterdrucks im Zwischenbehälter (40) das Einlassventil (30) aus der Schließstellung in die Offenstellung geschaltet wird,
▪ in einem nachfolgenden zweiten Spülungsschritt das Einlassventil (30) geschlossen wird,
▪ in einem nachfolgenden dritten Spülungsschritt ein Überdruck im Zwischenbehälter (40) erzeugt und nach Erzeugung des Überdrucks im Zwischenbehälter (40) das Auslassventil (50) aus der Schließstellung in die Offenstellung geschaltet wird,
**dadurch gekennzeichnet, dass**
die Steuerungseinheit (100) ausgebildet ist, um nach dem dritten Spülungsschritt - in einem ersten Verschlusszustand das Einlassventil (30) geschlossen und das Auslassventil (50) geöffnet zu halten,
- in einem zweiten Verschlusszustand das Einlassventil (30) geöffnet und das Auslassventil (50) geschlossen zu halten, und
- innerhalb einer Reihe mehrerer aufeinanderfolgender Spülvorgänge den ersten und zweiten Verschlusszustand abwechselnd einzustellen.

2. Vakuumtoilette nach Anspruch 1,
**dadurch gekennzeichnet, dass** die Steuerungseinheit (100) ausgebildet ist, um nach einer Anzahl von N-1 Spülvorgängen jeweils den ersten Verschlusszustand einzustellen und nach dem N-ten Spülvorgang den zweiten Verschlusszustand einzustellen, wobei N eine Anzahl zwischen 2 und 50 ist oder
dass die Steuerungseinheit (100) ausgebildet ist, um nach einer Anzahl von M-1 Spülvorgängen jeweils den zweiten Verschlusszustand einzustellen und nach dem M-ten Spülvorgang den ersten Verschlusszustand einzustellen, wobei M eine Anzahl zwischen 2 und 50 ist, und/oder
dass die Steuerungseinheit (100) ausgebildet ist, um nach einer vorbestimmten Zeitspanne vom ersten in den zweiten Verschlusszustand zu wechseln und nach Ablauf einer weiteren vorbestimmten zweiten Zeitspanne, die vorzugsweise der ersten Zeitspanne entspricht, vom zweiten in den ersten Verschlusszustand zurückzuwechseln.

3. Vakuumtoilette nach einem der vorhergehenden Ansprüche,
**gekennzeichnet durch** einen Spülwasserbehälter (20) und eine mit dem Spülwasserbehälter verbundene Spülwasserleitung (22), die in das Toilettenbecken (10) mündet, wobei die Steuerungseinheit (100) ausgebildet ist, um nach dem dritten Spülungsschritt eine über die Spülwasserleitung (22) in das Toilettenbecken (10) abgegebene Nachspülwassermenge zu dosieren, wobei vorzugsweise die Spülwassermenge im zweiten Verschlusszustand größer ist als im ersten Verschlusszustand.

4. Vakuumtoilette nach Anspruch 3,
**dadurch gekennzeichnet, dass** die Steuerungseinheit (100) ausgebildet ist, um vor dem ersten Spülungsschritt eine über die Spülwasserleitung (22) in das Toilettenbecken (10) abgegebene Vorspülwassermenge zu dosieren.

5. Vakuumtoilette nach einem der vorhergehenden Ansprüche,
**dadurch gekennzeichnet, dass** das Einlassventil (30) und/oder das Auslassventil (50) ein Quetschventil ist, bei dem die Schließstellung durch radiales Zusammendrücken eines elastischen Schlauchabschnitts erzeugt wird und die Offenstellung durch elastische Rückverformung des elastischen Schlauchabschnitts erzeugt wird.

6. Vakuumtoilette nach Anspruch 5,
**dadurch gekennzeichnet, dass** der Schlauchabschnitt von einem Ventilgehäuse umgeben ist, welches einen Zwischenraum zwischen dem Ventilgehäuse und dem Schlauchabschnitt ausbildet und die Steuerungseinheit (100) ausgebildet ist, um eine mit dem Zwischenraum verbundene Vakuumquelle anzusteuern zum Aufbringen eines Vakuums im Zwischenraum zur Unterstützung der Rückkehr des Schlauchabschnitts aus der Schließstellung in die Offenstellung.

7. Verfahren zur automatischen Steuerung einer Vakuumtoilette mit einem Toilettenbecken (10) mit einer Beckenauslassöffnung (11) mittels einer Steuerungseinheit (100), mit den durch die Steuerungseinheit (100) sequentiell gesteuerten Schritten eines Spülvorgangs:
- Beaufschlagen eines Zwischenbehälter (40) mit einem Vakuum,
- Öffnen eines Einlassventils (30) in einem Strömungsweg zwischen der Toilettenbeckenauslassöffnung (11) und einer Zwischenbehälter-Einlassöffnung,
- Schließen des Einlassventils (30)
- Beaufschlagen des Zwischenbehälters (40) mit einem Überdruck,
- Öffnen eines Auslassventil (50) in einem Strömungsweg zwischen einer Zwischenbehälter-Auslassöffnung(42) und einer Abwassertank-Einlassöffnung, **gekennzeichnet durch** die dem Spülvorgang nachfolgenden Schritte: wechselweises Einstellen eines ersten und zweiten Verschlusszustand innerhalb einer Reihe mehrerer aufeinanderfolgender Spülvorgänge wobei
- in dem ersten Verschlusszustand das Einlassventil (30) geschlossen und das Auslassventil (50) geöffnet ist, und
- n dem zweiten Verschlusszustand das Einlassventil (30) geöffnet und das Auslassventil (50) geschlossen ist.

8. Verfahren nach Anspruch 7,
**dadurch gekennzeichnet, dass** nach einer Anzahl von N-1 Spülvorgängen jeweils der erste Verschlusszustand eingestellt und nach dem N-ten Spülvorgang der zweite Verschlusszustand eingestellt wird, wobei N eine Anzahl zwischen 2 und 50 ist oder
dass nach einer Anzahl von M-1 Spülvorgängen jeweils der zweite Verschlusszustand eingestellt und nach dem M-ten Spülvorgang der erste Verschlusszustand eingestellt wird, wobei M eine Anzahl zwischen 2 und 50 ist und/oder
dass nach Ablauf einer vorbestimmten Zeitspanne zwischen dem ersten und zweiten Verschlusszustand gewechselt wird.

9. Verfahren nach einem der vorhergehenden Ansprüche 7 oder 8,
**dadurch gekennzeichnet, dass** nach dem Spülvorgang eine Nachspülwassermenge in das Toilettenbecken (10) abgegeben und vorzugsweise so dosiert wird, dass die Spülwassermenge im zweiten Verschlusszustand größer ist als im ersten Verschlusszustand.

10. Verfahren nach Anspruch 9,
**dadurch gekennzeichnet, dass** vor dem ersten Spülungsvorgang eine Vorspülwassermenge in das Toilettenbecken (10) abgegeben wird.

11. Verfahren nach einem der vorhergehenden Ansprüche 7-10,
**dadurch gekennzeichnet, dass** das Einlassventil (30) und/oder das Auslassventil (40) durch radiales Zusammendrücken eines elastischen Schlauchabschnitts geschlossen und durch elastische Rückverformung des elastischen Schlauchabschnitts geöffnet wird.

12. Verfahren nach Anspruch 11,
**dadurch gekennzeichnet, dass** der Öffnungsvorgang des Einlassventils (30) und/oder des Auslassventils (50) durch Aufbringen eines Vakuums in einem Zwischenraum zwischen einem Ventilgehäuse und dem Schlauchabschnitt unterstützt wird.

13. Steuerungseinheit zur Steuerung eines Spülvorgangs einer Vakuumtoilette, indem die Steuerungseinheit (100) ausgebildet ist, um
- in einem ersten Spülungsschritt über einen Steuerluftleitungsanschluss einen Unterdruck in einem Zwischenbehälter (40) zu erzeugen und nach Erzeugung des Unterdrucks im Zwischenbehälter (40) ein im Strömungsweg zwischen einem Toilettenbecken (10) und dem Zwischenbehälter (40) angeordnetes Einlassventil (30) aus einer Schließstellung in eine Offenstellung zu schalten,
- in einem nachfolgenden zweiten Spülungsschritt das Einlassventil (30) zu schließen,
- in einem nachfolgenden dritten Spülungsschritt einen Überdruck im Zwischenbehälter (40) zu erzeugen und nach Erzeugung des Überdrucks im Zwischenbehälter (40) ein im Strömungsweg zwischen dem Zwischenbehälter (40) und einem Abwassertank (60) angeordnetes Auslassventil (50) aus der Schließstellung in die Offenstellung zu schalten,
**dadurch gekennzeichnet, dass**
die Steuerungseinheit (100) ausgebildet ist, um nach dem dritten Spülungsschritt - in einem ersten Verschlusszustand das Einlassventil (30) geschlossen und das Auslassventil (50) geöffnet zu halten,
- in einem zweiten Verschlusszustand das Einlassventil (30) geöffnet und das Auslassventil (50) geschlossen zu halten, und
- innerhalb einer Reihe mehrerer aufeinanderfolgender Spülvorgänge den ersten und zweiten Verschlusszustand abwechselnd einzustellen.

14. Steuerungseinheit nach Anspruch 13,
**dadurch gekennzeichnet, dass** die Steuerungseinheit (100) nach den Merkmalen der Steuerungseinheit gemäß einem der Ansprüche 2-6 fortgebildet ist.

## Claims

1. A vacuum toilet, comprising:
- a toilet bowl (10) with a bowl outlet opening,
- an intermediate tank (40) with an intermediate tank inlet opening (41), an intermediate tank outlet opening (42) and a connection for the control air pipe,
- a first flow path through a first outlet pipe which connects the bowl outlet opening to the intermediate tank inlet opening (41) of the intermediate tank,
- an inlet valve (30) which opens the first flow path in the open position and which closes it in the closed position,
- a wastewater tank (60) with a wastewater tank inlet opening which is connected to the intermediate tank outlet opening via a second outlet pipe by means of a second flow path,
- an outlet valve (50) which opens the second flow path in an open position and which closes it in a closed position,
- a control unit (100) configured to carry out a flushing operation in which,
▪ in a first flushing step, underpressure is generated in the intermediate tank (40) via the connection for the control air pipe and, after underpressure has been generated in the intermediate tank (40), the inlet valve (30) is switched from the closed position to the open position,
▪ in a subsequent second flushing step, the inlet valve (30) is closed,
▪ in a subsequent third flushing operation, overpressure is generated in the intermediate tank (40) and, after overpressure has been generated in the intermediate tank (40), the outlet valve (50) is switched from the closed position to the open position,
**characterised in that**
the control unit (100) is configured, in a first closure mode, to keep the inlet valve (40) closed and the outlet valve (50) open after the third flushing step,
- to keep the inlet valve (30) open and the outlet valve (50) closed, in a second closure mode, and
- to alternatingly set the first and the second closure mode within a series of several successive flushing operations.

2. The vacuum toilet according to claim 1,
**characterised in that** the control unit (100) is configured to set the first closure mode after each N-1st flushing operation and the second closure mode after the N-th flushing operation, where N is a number between 2 and 50 and/or
**in that** the control unit (100) is configured to set the second closure mode after each M-1st flushing operation and to set the first closure mode after the M-th flushing operation, where M is a number between 2 and 50, and/or in that the control unit (100) is configured to switch from the first to the second closure mode after a predetermined interval has elapsed, and to switch back from the second into the first closure mode after a further predetermined second interval which is preferably identical to the first interval.

3. The vacuum toilet according to any one of the preceding claims, **characterised by** a flush water container (20) and a flush water pipe (22) connected to the flush water container which opens into the toilet bowl (10), wherein the control unit (100) is configured to meter, after the third flushing operation, a volume of flush water which is dispensed into the toilet bowl (10) via the flush water pipe (22), wherein the flush water volume in the second closure mode is preferably greater than in the first closure mode.

4. The vacuum toilet according to claim 3,
**characterised in that** the control unit (100) is configured to meter, before the first flushing step, a volume of pre-flush water which is dispensed into the toilet bowl (10) via the flush water pipe (22).

5. The vacuum toilet according to any one of the preceding claims, **characterised in that** the inlet valve (30) and/or the outlet valve (50) is a pinch valve, in which the closed position is produced by radially compressing a resilient hose portion and the open position is produced by the resilient hose portion elastically regaining its original shape.

6. The vacuum toilet according to claim 5,
**characterised in that** the hose portion is surrounded by a valve housing which forms a cavity between the valve housing and the hose portion, and the control unit (100) is configured to control a vacuum source connected to the cavity to produce a vacuum in the cavity for supporting the hose portion in returning from the closed position to the open position.

7. A method for automatically controlling, by means of a control unit (100), a vacuum toilet comprising a toilet bowl (10) with a bowl outlet opening (11), said method comprising the following steps of a flushing operation sequentially controlled by the control unit (100):
- applying a vacuum to an intermediate tank (40),
- opening an inlet valve (30) in a flow path between the toilet bowl outlet opening (11) and an intermediate tank inlet opening,
- closing the inlet valve (30)
- applying overpressure to the intermediate tank (40),
- opening an outlet valve (50) in a flow path between an intermediate tank outlet opening (42) and a wastewater tank inlet opening,
**characterised by** the following steps being carried out after the flushing operation: alternatingly setting a first and a second closure mode within a series of several successive flushing operations, wherein
- in the first closure mode, the inlet valve (30) is closed and the outlet valve (50) is open, and
- in the second closure mode, the inlet valve (30) is open and the outlet valve (50) is closed.

8. The method according to claim 7,
**characterised in that** the first closure mode is set after N-1 flushing operations, and the second closure mode is set after the N-th flushing operation, where N is a number between 2 and 50 and/or
**in that** the second closure mode is set after each M-1st flushing operation, and the first closure mode is set after the M-th flushing operation, where M is a number between 2 and 50 and/or **in that** a switch is made between the first and the second closure mode after a predetermined interval has elapsed.

9. The method according to any one of the preceding claims 7 or 8,
**characterised in that**, after the flushing operation, a volume of flush water is dispensed into the toilet bowl (10) and is preferably metered such that the flush water volume in the second closure mode is greater than in the first closure mode.

10. The method according to claim 9,
**characterised in that** a volume of pre-flush water is dispensed into the toilet bowl (10) before the first flushing operation.

11. The method according to any one of the preceding claims 7 to 10,
**characterised in that** the inlet valve (30) and/or the outlet valve (50) is closed by radially compressing a resilient hose portion and is opened by the resilient hose elastically regaining its original shape.

12. The method according to claim 11,
**characterised in that** the process of opening the inlet valve (30) and/or the outlet valve (50) is supported by applying a vacuum in a cavity between a valve housing and the hose portion.

13. A control unit for controlling a flushing operation of a vacuum toilet, the control unit (100) being configured
- to generate underpressure in the intermediate tank (40) via the connection for the control air pipe, in a first flushing step, and, after underpressure has been generated in the intermediate tank (40), to switch an inlet valve (30) arranged in the flow path between a toilet bowl (10) and the intermediate tank (40) from the closed position to the open position,
- to close the inlet valve (30) in a subsequent second flushing step,
- to generate overpressure in the intermediate tank (40) in a subsequent third flushing step and, after overpressure has been generated in the intermediate tank (40), to switch an outlet valve (50) arranged in the flow path between the intermediate tank (40) and a wastewater tank (60) from the closed position to the open position,
**characterised in that**
the control unit (100) is configured to keep, in a first closure mode, the inlet valve (30) closed and the outlet valve (50) open after the third flushing step,
- to keep the inlet valve (30) open and the outlet valve (50) closed, in a second closure mode, and
- to alternatingly set the first and the second closure mode within a series of several successive flushing operations.

14. The control unit according to claim 13,
**characterised in that** the control unit (100) is developed according to the features of the control unit of any one of claims 2 to 6.

## Revendications

1. Toilettes sous vide, comprenant :
- une cuvette de toilettes (10) avec une ouverture d'évacuation de cuvette,
- un réservoir intermédiaire (40) avec une ouverture d'admission de réservoir intermédiaire (41), une ouverture d'évacuation de réservoir intermédiaire (42) et un raccord de conduite d'air de commande,
- un premier trajet de flux par une première conduite d'évacuation, laquelle relie l'ouverture d'évacuation de cuvette à l'ouverture d'admission de réservoir intermédiaire (41),
- une soupape d'admission (30), laquelle libère le premier trajet de flux dans une position ouverte et le bloque dans une position fermée,
- un réservoir d'eaux usées (60) avec une ouverture d'admission de réservoir d'eaux usées, qui est reliée à l'ouverture d'évacuation de réservoir intermédiaire au moyen d'un deuxième trajet de flux par le biais d'une deuxième conduite d'évacuation,
- une soupape d'évacuation (50), laquelle libère le deuxième trajet de flux dans une position ouverte et le bloque dans une position fermée,
- une unité de commande (100), laquelle est réalisée pour effectuer une opération de rinçage, en ce que
• dans une première étape de rinçage, une dépression est générée dans le réservoir intermédiaire (40) par le biais du raccord de conduite d'air de commande et après la génération de la dépression dans le réservoir intermédiaire (40), la soupape d'admission (30) est commutée de la position fermée à la position ouverte,
• dans une deuxième étape de rinçage suivante, la soupape d'admission (30) est fermée,
• dans une troisième étape de rinçage suivante, une surpression est générée dans le réservoir intermédiaire (40) et après la génération de la surpression dans le réservoir intermédiaire (40), la soupape d'évacuation (50) est commutée de la position fermée à la position ouverte,
**caractérisées en ce que**
l'unité de commande (100) est réalisée pour, après la troisième étape de rinçage,
- maintenir, dans un premier état de verrouillage, la soupape d'admission (30) fermée et la soupape d'évacuation (50) ouverte,
- maintenir, dans un deuxième état de verrouillage, la soupape d'admission (30) ouverte et la soupape d'évacuation (50) fermée, et
- à l'intérieur d'une série de plusieurs opérations de rinçage successives, régler à tour de rôle le premier et deuxième état de verrouillage.

2. Toilettes sous vide selon la revendication 1, **caractérisées en ce que** l'unité de commande (100) est réalisée pour régler après un nombre de N-1 opérations de rinçage respectivement le premier état de verrouillage, et régler après la N-ième opération de rinçage le deuxième état de verrouillage, dans lesquelles N est un nombre entre 2 et 50 ou
que l'unité de commande (100) est réalisée pour régler après un nombre de M-1 opérations de rinçage respectivement le deuxième état de verrouillage, et régler après la M-ième opération de rinçage le premier état de verrouillage, dans lesquelles M est un nombre entre 2 et 50, et/ou
que l'unité de commande (100) est réalisée pour passer après un laps de temps prédéterminé du premier au deuxième état de verrouillage et après écoulement d'un autre deuxième laps de temps prédéterminé, qui correspond de préférence au premier laps de temps, repasser du deuxième au premier état de verrouillage.

3. Toilettes sous vide selon l'une quelconque des revendications précédentes,
**caractérisées par** un réservoir d'eau de rinçage (20) et une conduite d'eau de rinçage (22) reliée au réservoir d'eau de rinçage, qui débouche dans la cuvette de toilettes (10), dans lesquelles l'unité de commande (100) est réalisée pour doser après la troisième étape de rinçage une quantité d'eau d'après-rinçage délivrée dans la cuvette de toilettes (10) par le biais de la conduite d'eau de rinçage (22), dans lesquelles la quantité d'eau de rinçage dans le deuxième état de verrouillage est de préférence supérieure à celle dans le premier état de verrouillage.

4. Toilettes sous vide selon la revendication 3,
**caractérisées en ce que** l'unité de commande (100) est réalisée pour doser avant la première étape de rinçage une quantité d'eau de pré-rinçage délivrée dans la cuvette de toilettes (10) par le biais de la conduite d'eau de rinçage (22).

5. Toilettes sous vide selon l'une quelconque des revendications précédentes,
**caractérisées en ce que** la soupape d'admission (30) et/ou la soupape d'évacuation (50) est un robinet-vanne à manchon déformable, dans lequel la position fermée est générée par compression radiale d'une section de tuyau élastique et la position ouverte est générée par reprise élastique de la section de tuyau élastique.

6. Toilettes sous vide selon la revendication 5,
**caractérisées en ce que** la section de tuyau est entourée par un boîtier de soupape, lequel forme un espace intermédiaire entre le boîtier de soupape et la section de tuyau et l'unité de commande (100) est réalisée pour commander une source de vide reliée à l'espace intermédiaire pour l'application d'un vide dans l'espace intermédiaire pour soutenir le retour de la section de tuyau de la position fermée à la position ouverte.

7. Procédé de commande automatique de toilettes sous vide avec une cuvette de toilettes (10) avec une ouverture d'évacuation de cuvette (11) au moyen d'une unité de commande (100), avec les étapes d'une opération de rinçage commandées séquentiellement par l'unité de commande (100) :
- alimentation d'un réservoir intermédiaire (40) en un vide,
- ouverture d'une soupape d'admission (30) dans un trajet de flux entre l'ouverture d'évacuation de cuvette de toilettes (11) et une ouverture d'admission de réservoir intermédiaire,
- fermeture de la soupape d'admission (30)
- alimentation du réservoir intermédiaire (40) en une suppression,
- ouverture d'une soupape d'évacuation (50) dans un trajet de flux entre une ouverture d'évacuation de réservoir intermédiaire (42) et une ouverture d'admission de réservoir d'eaux usées,
**caractérisé par** les étapes suivant l'opération de rinçage :
réglage alterné d'un premier et deuxième état de verrouillage à l'intérieur d'une série de plusieurs opérations de rinçage successives dans lequel
- dans le premier état de verrouillage, la soupape d'admission (30) est fermée et la soupape d'évacuation (50) est ouverte, et
- dans le deuxième état de verrouillage, la soupape d'admission (30) est ouverte et la soupape d'évacuation (50) est fermée.

8. Procédé selon la revendication 7,
**caractérisé en ce qu'**après un nombre de N-1 opérations de rinçage respectivement le premier état de verrouillage est réglé et après la N-ième opération de rinçage le deuxième état de verrouillage est réglé, dans lequel N est un nombre entre 2 et 50 ou
qu'après un nombre de M-1 opérations de rinçage respectivement le deuxième état de verrouillage est réglé et après la M-ième opération de rinçage le premier état de verrouillage est réglé, dans lequel M est un nombre entre 2 et 50 et/ou
qu'après écoulement d'un laps de temps prédéterminé, il y a commutation entre le premier et deuxième état de verrouillage.

9. Procédé selon l'une quelconque des revendications précédentes 7 ou 8,
**caractérisé en ce qu'**après l'opération de rinçage, une quantité d'eau d'après-rinçage est délivrée dans la cuvette de toilettes (10) et dosée de préférence de telle sorte que la quantité d'eau de rinçage dans le deuxième état de verrouillage est supérieure à celle dans le premier état de verrouillage.

10. Procédé selon la revendication 9,
**caractérisé en ce qu'**avant la première étape de rinçage, une quantité d'eau de pré-rinçage est délivrée dans la cuvette de toilettes (10).

11. Procédé selon l'une quelconque des revendications précédentes 7 à 10,
**caractérisé en ce que** la soupape d'admission (30) et/ou la soupape d'évacuation (40) est fermée par compression radiale d'une section de tuyau élastique et ouverte par reprise élastique de la section de tuyau élastique.

12. Procédé selon la revendication 11,
**caractérisé en ce que** l'opération d'ouverture de la soupape d'admission (30) et/ou de la soupape d'évacuation (50) est soutenue par application d'un vide dans un espace intermédiaire entre un boîtier de soupape et la section de tuyau.

13. Unité de commande pour la commande d'une opération de rinçage de toilettes sous vide, en ce que l'unité de commande (100) est réalisée pour
- générer, dans une première étape de rinçage, une dépression dans un réservoir intermédiaire (40) par le biais d'un raccord de conduite d'air de commande et après la génération de la dépression dans le réservoir intermédiaire (40), une soupape d'admission (30) agencée dans le trajet de flux entre une cuvette de toilette (10) et le réservoir intermédiaire (40) est commutée d'une position fermée à une position ouverte,
- fermer, dans une deuxième étape de rinçage suivante, la soupape d'admission (30),
- générer, dans une troisième étape de rinçage suivante, une surpression dans le réservoir intermédiaire (40) et après la génération de la surpression dans le réservoir intermédiaire (40), une soupape d'évacuation (50) agencée dans le trajet de flux entre le réservoir intermédiaire (40) et un réservoir d'eaux usées (60) est commutée de la position fermée à la position ouverte,
**caractérisée en ce que**
l'unité de commande (100) est réalisée pour, après la troisième étape de rinçage,
- maintenir, dans un premier état de verrouillage, la soupape d'admission (30) fermée et la soupape d'évacuation (50) ouverte,
- maintenir, dans un deuxième état de verrouillage, la soupape d'admission (30) ouverte et la soupape d'évacuation (50) fermée, et
- à l'intérieur d'une série de plusieurs opérations de rinçage successives, régler à tour de rôle le premier et deuxième état de verrouillage.

14. Unité de commande selon la revendication 13,
**caractérisée en ce que** l'unité de commande (100) est formée selon les caractéristiques de l'unité de commande selon l'une quelconque des revendications 2 à 6.
